# EUROPEAN PATENT APPLICATION

(11) **EP 4 723 236 A1**
(43) Date of publication of application: **08.04.2026**
(21) Application number: 24943691.6
(22) Date of filing: 31.07.2024
(51) Int. Cl.: H01M 4/525, H01M 4/505, H01M 4/1391, H01M 4/04

(54) **POSITIVE ELECTRODE ACTIVE MATERIAL AND PREPARATION METHOD THEREFOR, POSITIVE ELECTRODE SHEET, BATTERY, AND ELECTRIC DEVICE**

(30) Priority: 28.06.2024 CN 202410867578
(71) Applicant: Beijing Easpring Material Technology Co., Ltd., Beijing 100160 (CN)
(72) Inventor: LIU, Yun, Beijing 100160 (CN); ZHOU, Penghu, Beijing 100160 (CN); ZHANG, Xuequan, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2024/109045
(87) International publication number: WO 2026/000536

(57) **Abstract**

Provided are a cathode active material and a preparation method thereof, a positive electrode plate, a battery, and an electrical device. The cathode active material includes secondary particles. The secondary particles are formed with aggregated primary particles. The secondary particles include open pores and closed pores. An open pore porosity Pₒ of the cathode active material accounts for 25% to 85% of a total porosity Pₜ of the cathode active material.

## Description

### FIELD

The present disclosure relates to the field of batteries, and particularly, to a cathode active material and a preparation method thereof, a positive electrode plate, a battery, and an electrical device.

### BACKGROUND

Lithium-ion batteries, due to their characteristics of light weight, low pollution, high energy density, and high monomer voltage, are widely used in various electronic products and transportation tools such as electric vehicles. In order to satisfy the growing demand of the consumers for endurance and service life of the electronic products and the transportation tools such as the electric vehicles, the lithium-ion batteries with high energy density and long cycle life are continuously being upgraded with the research and development and in terms of application aspects. A cathode active material, as a component having the greatest influences on performance of the lithium-ion batteries, is mainly developed in term of increasing the content of Ni in ternary cathode materials for increasing energy density. However, the accompanying intensified problems in terms of cycle performance and safety issues cannot be ignored.

### SUMMARY

The present disclosure aims to solve, at least to some extent, one of the technical problems in the related art. To this end, an object of the present disclosure is to provide a cathode active material and a preparation method thereof, a positive electrode plate, a battery, and an electrical device, enabling the cathode active material to have high electrochemical reaction activity, lithium-ion migration ability, energy density, and particle strength, thereby combining excellent performances of high energy density, good rate capability, and long cycle life.

The present disclosure is mainly based on the following problems and findings.

In polycrystal or quasi single crystal ternary cathode materials, secondary particles are typically formed by the aggregation of multiple primary particles, forming many pores on a surface or inside the material. Currently, there are studies on designing a structure and arrangement of cathode active material particles to intrinsically regulate cycle and safety performances of the materials. For example, there are ternary cathode materials in which a total fine pore volume below 200 nm on the surface is limited to range from 0.008 cm³/g to 0.012 cm³/g, and a ratio of the fine pore volume below 15 nm to the total fine pore volume is not more than 50%; there are also cathode materials with a large porosity in the center portion and a small porosity in the surface portion of the cross section of the secondary particles while a ratio of a short axis length to a long axis length of the secondary particles in the cross section and a ratio of a total pore area to a total particle area in the cross section satisfying the preset requirements; and in addition, there are cathode materials with a ratio of a cross-sectional area to a hole-part area of the secondary particles satisfying the preset requirements, etc. In fact, controlling an appropriate pore volume or porosity is crucial to the design of the cathode active materials and the electrode plate, which not only affects the electrochemical performances of the cathode active materials, but also affects the particle strength and pallet density of the materials, as well as the cycle life and other performances. In the present disclosure, it is expected that the problem of the balance among material particle strength, energy density, and cycle stability can be solved to a certain extent by regulating the relationship and/or structure between the open pores and closed pores of the cathode active material (such as by regulating the aggregation effect between primary particles, etc.). Thus, the material can have higher electrochemical activity and high rate capability, excessive side reactions between the surface of the material and the electrolyte can be avoided, and the particle strength and the pallet density can be ensured. In this way, a cathode active material with high energy density, high particle strength, and long cycle life can be obtained.

In view of this, in a first aspect, the present disclosure provides a cathode active material. The cathode active material includes secondary particles. The secondary particles are formed with aggregated primary particles. The secondary particles include open pores and closed pores. An open pore porosity Pₒ of the cathode active material accounts for 25% to 85% of a total porosity Pt of the cathode active material.

For the cathode active materials of agglomeration type such as ternary cathode active materials, the porosity can reflect a degree of fusion and aggregation of the primary particles. A small number of pores are exposed on the surface as open pores, which are related to a surface activity of the material and an infiltration area of the electrolyte. Most of the pores are closed pores and located inside the secondary particle of the material, which cannot be infiltrated by the electrolyte. The closed pores are related to a particle strength of the material, the contact effect between the primary particles, and an expansion and contraction space of the material during cycling. A mass transfer between the primary particles inside the secondary particle and a conductivity of the primary particles inside the secondary particle deteriorate when a ratio of the open pore porosity to the total porosity of the material is lower, i.e., when a proportion of closed pore porosity is higher. However, an appropriate closed pore porosity can provide space for the material to expand and contract during charge and discharge, thereby releasing the extrusion stress between the primary particles. Consequently, the cycle performance can be improved. In the present disclosure, by controlling the ratio of the open pore porosity to the total porosity of the cathode active material to range from 25% to 85%, the material can have higher particle strength, higher rate capability, and better cycle stability against expansion and contraction during charge and discharge.

In addition, the cathode active material according to the embodiments of the present disclosure may also have the following additional technical features.

In some embodiments of the present disclosure, the open pore porosity Pₒ of the cathode active material ranges from 0.5% to 3%.

In some embodiments of the present disclosure, an average open pore size Dₒ of the cathode active material ranges from 10 nm to 50 nm.

In some embodiments of the present disclosure, an open pore volume Vₒ of the cathode active material ranges from 0.002 cm³/g to 0.01 cm³/g.

In some embodiments of the present disclosure, a skeleton volume Vt of the cathode active material ranges from 0.2 cm³/g to 0.25 cm³/g.

In some embodiments of the present disclosure, the total porosity Pₜ of the cathode active material ranges from 1% to 10%.

In some embodiments of the present disclosure, in the secondary particles, the closed pores have an average pore size D_{C} ranging from 40 nm to 200 nm.

In some embodiments of the present disclosure, a specific surface area of the cathode active material is S⁰; a specific surface area of the cathode active material fractured by a pressure of 3.5 tons is S^{3.5}; and a specific surface area change rate ΔSSA of the cathode active material ranges from 0% to 50%, where ΔSSA=(S^{3.5}-S⁰)/S⁰×100%.

In some embodiments of the present disclosure, a particle size of the cathode active material corresponding to a cumulative volume distribution of the cathode active material reaching 10% is D₁₀⁰; a particle size of the cathode active material fractured by a pressure of 3.5 tons corresponding to the cumulative volume distribution of the cathode active material reaching 10% is D₁₀^{3.5}; and a particle size change rate ΔD₁₀ of the cathode active material ranges from 0% to 20%, where ΔD₁₀=(D₁₀⁰-D₁₀^{3.5})/D₁₀⁰×100%.

In some embodiments of the present disclosure, the cathode active material includes Li₁₊ₐNiₓCo_{y}Mn_{z}MₘO₂, where -0.05≤a≤0.3, 0.8≤x≤1, 0≤y≤0.2, 0≤z≤0.2, and 0≤m≤0.01; and M includes at least one of Mg, La, Al, Sr, Ba, Y, Zr, Ca, Fe, Zn, Sn, W, V, Mo, Sb, Ta, Ti, Nb, S, P, and B.

In some embodiments of the present disclosure, M includes at least one of Sn, W, V, La, Mo, Sb, Ta, Ti, and Nb, and a full width at half maximum of a diffraction peak corresponding to a 104 crystal plane in an X-Ray Diffraction (XRD) spectrum of the primary particles ranges from 0.245 to 0.270.

In some embodiments of the present disclosure, M includes at least one of S, P, and B, and the full width at half maximum of the diffraction peak corresponding to the 104 crystal plane in the XRD spectrum of the primary particles ranges from 0.250 to 0.275.

In some embodiments of the present disclosure, M includes at least one of Mg, Al, Sr, Ba, Y, Zr, Ca, Fe, and Zn, and the full width at half maximum of the diffraction peak corresponding to the 104 crystal plane in the XRD spectrum of the primary particles ranges from 0.255 to 0.280.

In some embodiments of the present disclosure, the secondary particles include a matrix and a coating layer provided on a least part of a surface of the matrix. The matrix includes the Li₁₊ₐNiₓCo_{y}Mn_{z}MₘO₂.

In some embodiments of the present disclosure, the coating layer includes element J, and the element J includes at least one of Al, Zr, Ti, F, B, Cl, Br, I, S, W, Co, Sn, and Mo.

In some embodiments of the present disclosure, the coating layer includes element J, and a ratio of the total number of moles of Ni, Co, Mn, and M in the matrix to the number of moles of the element J in the coating layer is 1: (0 to 0.05).

In a second aspect, the present disclosure provides a method for preparing the above-mentioned cathode active material. The method includes: (1) performing, under an alkaline condition, a co-precipitation reaction of an aqueous solution of a nickel source, a cobalt source, and a manganese source, to obtain precursor particles; and (2) mixing the precursor particles with a lithium source and an M source, and performing a sintering treatment on the mixture, to obtain the cathode active material.

According to the method for preparing the cathode active material in the second aspect of the present disclosure, the temperature and duration of the sintering treatment can be regulated based on the combination of the composition of nickel, cobalt, and manganese, the control of a porosity of the precursor, and the doping amount of the element M, thereby regulating an aggregation effect of the primary particles in the secondary particles. Therefore, it is conducive to obtaining a cathode active material in which a ratio of an open pore porosity to a total porosity ranges from 25% to 85%, allowing the material to have higher particle strength, high rate capability, and better cycle stability against expansion and contraction during charge and discharge.

In some embodiments of the present disclosure, in step (1), the co-precipitation reaction is performed under the alkaline condition with a pH value ranging from 10 to 11.5.

In some embodiments of the present disclosure, in step (2), the sintering treatment includes: holding a temperature ranging from 650°C to 900°C for 4 hours to 15 hours.

In some embodiments of the present disclosure, the step (2) may further include: mixing a sintered product with a coating material containing a J source, and keeping the mixture at a temperature ranging from 300°C to 700°C for 5 hours to 10 hours.

In a third aspect, the present disclosure provides a positive electrode plate. The positive electrode plate includes the above-mentioned cathode active material or the cathode active material prepared by the above-mentioned method. The features and effects of the above-mentioned cathode active material and the above-mentioned method for preparing the cathode active material are also applicable to the positive electrode plate, which will not be repeated herein. In general, the positive electrode plate has good cycle stability and long cycle life.

In a fourth aspect, the present disclosure provides a battery. The battery includes the above-mentioned positive electrode plate.

In a fifth aspect, the present disclosure provides an electrical device. The electrical device includes the above-mentioned battery.

### BRIEF DESCRIPTION OF THE DRAWINGS

FIG. 1 is a cross-sectional view of a precursor prepared according to Example 1 of the present disclosure.
FIG. 2 shows distribution and pore size of closed pores in a cross section of a cathode active material prepared according to Example 1 of the present disclosure.

### DETAILED DESCRIPTION

The embodiments of the present disclosure are described in detail below. The embodiments described below are exemplary and are intended to explain the present disclosure, but should not be construed as limiting the present disclosure.

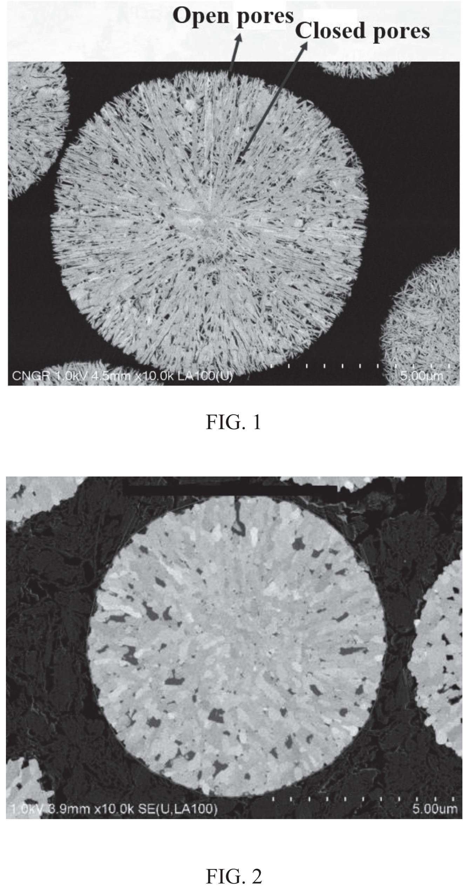

In a first aspect, the present disclosure provides a cathode active material. The cathode active material includes secondary particles. The secondary particles are formed with aggregated primary particles. The secondary particles include open pores and closed pores (which shall be interpretated with reference to FIG. 1). An open pore porosity Pₒ of the cathode active material accounts for 25% to 85% of a total porosity Pt of the cathode active material.

For example, the open pore porosity Pₒ of the cathode active material may account for 25%, 30%, 35%, 40%, 45%, 50%, 55%, 60%, 65%, 70%, 75%, 80%, or 85%, etc. of the total porosity Pt of the cathode active material. The open pore porosity Pₒ is a ratio of a volume Vₒ of open pores the cathode active material that can be filled with nitrogen to a total volume of the cathode active material. The open pore porosity can be measured by performing N₂ adsorption and desorption isotherm test and analysis on the cathode active material, for example, by means of a Tristar 3020 surface analyzer from Micromeritics company. With reference to FIG. 2, the total porosity Pₜ can be the 3/2 power of the ratio of the total pore area Sₜ of the cross section of the cathode active material under an electron microscope to the total cross section area Sₘ of the material, that is, the 3/2 power of Sₜ/Sₘ. The total porosity Pt can be measured by testing the average value of the total porosity of multiple secondary particles in the sample. The total porosity Pt may be specifically measured by the following operations. With an ion milling instrument (such as a Hitachi IM4000 II ion milling instrument), ion cutting is performed on the cathode active material sample to obtain cross sections of multiple secondary particles, and images of the cross sections of the material are sampled by means of a scanning electron microscope. Then, image contrast analysis is performed using a LIBMAS microscopic intelligent image analysis system. The number of secondary particles to be tested that are sampled and selected in the test sample should be ≥6, for example, ≥8, ≥10, ≥15, ≥20, ≥30, ≥40 or ≥50, etc., and those skilled in the art can flexibly select according to actual needs. In addition, when taking samples with the scanning electron microscope, samples with a cross-sectional diameter between the material particle sizes D₅₀ and D₈₀ can be selected to try to allow the taken sample to be a cross section of the center of the secondary particles or a cross section close to the center of the secondary particles, thereby improving the accuracy of the total porosity test. D₅₀ is a particle size of the cathode active material corresponding to a cumulative volume distribution of the cathode active material reaching 50% (that is, the part of the cathode active material with a particle size smaller than D₅₀ accounts for 50%), and D₈₀ is a particle size of the cathode active material corresponding to a cumulative volume distribution of the cathode active material reaching 80% (that is, the part of the cathode active material with a particle size smaller than D₈₀ accounts for 80%).

When the primary particles are aggregated to be the secondary particles, formed are open pores, which are in an unimpeded communication with the external environment, and closed pores, which are inaccessible to external gas or electrolyte. For the cathode active materials of agglomeration type such as ternary cathode active materials, the porosity can reflect a degree of fusion and aggregation of the primary particles. A small number of pores are exposed on the surface as open pores, which are related to a surface activity of the material and an infiltration area of the electrolyte. Most of the pores are closed pores and located inside the secondary particle of the material, which cannot be infiltrated by the electrolyte. The closed pores are related to a particle strength of the material, the contact effect between the primary particles, and an expansion and contraction space of the material during cycling. A mass transfer between the primary particles inside the secondary particle and a conductivity of the primary particles inside the secondary particle may deteriorate when a ratio of the open pore porosity to the total porosity of the material is lower, i.e., when a proportion of closed pore porosity is higher. However, an appropriate closed pore porosity can provide space for the material to expand and contract during charge and discharge, thereby releasing the extrusion stress between the primary particles. Consequently, the cycle performance can be improved. In the present disclosure, by controlling the ratio of the open pore porosity to the total porosity of the cathode active material to range from 25% to 85%, the material can have higher particle strength, higher rate capability, and better cycle stability against expansion and contraction during charge and discharge.

The cathode active material according to the above embodiments of the present disclosure is described in detail below with reference to FIG. 1 to FIG. 2.

In some specific embodiments of the present disclosure, the method for obtaining a cathode active material having a desired pore structure is not particularly limited, and those skilled in the art can flexibly select according to actual needs. For example, the aggregation effect that the primary particles are aggregated to be the secondary particles can be regulated by regulating one or more of the particle size, morphology, and arrangement of the primary particles. In this way, the pore structure of the cathode active material can be regulated, thereby obtaining a cathode active material having a desired pore structure. On this basis, the pore structure of the cathode active material can be further regulated by providing a coating layer or not and by regulating one or more of the material and thickness of the coating layer.

In some specific embodiments of the present disclosure, the open pore porosity Pₒ of the cathode active material can account for 30% to 60% of the total porosity Pt of the cathode active material, which is conductive to further allowing the material to have higher particle strength, higher rate capability, and better cycle stability against expansion and contraction during charge and discharge.

In some specific embodiments of the present disclosure, the open pore porosity Pₒ of the cathode active material can range from 0.5% to 3%, for example, 0.5%, 0.8%, 1%, 1.2%, 1.5%, 1.8%, 2%, 2.2%, 2.5%, 2.8%, or 3%, etc. The open pore porosity of the cathode active material is related to the surface activity of the material and the infiltration area of the electrolyte. A greater open pore porosity indicates that there are more surface-interfacial reaction channels for the intercalation and deintercalation of the lithium ions and indicates higher reaction activity, and better charge and discharge capacity, first efficiency and rate capability of the material. The appropriate reduction of the open pore porosity of cathode active material is conducive to reducing the side reactions between the surface of the cathode active material and the electrolyte. In the present disclosure, the open pore porosity Pₒ of the cathode active material satisfies the given range, which is beneficial for the higher electrochemical reaction activity and rate capability of the cathode active material and also lower the risk of excessive side reactions between the surface of the material and the electrolyte due to excessive open pore porosity. The excessive side reactions between the surface of the material and the electrolyte may cause a decrease in the storage, gas production, and cycle performance of the material. In this way, the cathode active material can have both higher capacity and longer service life. Further, the open pore porosity Pₒ of the cathode active material may range from 1.0% to 2.5%.

In some specific embodiments of the present disclosure, an average open pore size Dₒ of the cathode active material ranges from 10 nm to 50 nm, for example, 10 nm, 15 nm, 20 nm, 25 nm, 30 nm, 35 nm, 40 nm, 45 nm, or 50 nm, etc. The average open pore size of the cathode active material can be tested using a surface analyzer according to the Barrett Joyner Halenda (BJH) model. For example, The average open pore size can be measured with a Tristar 3020 surface analyzer from Micromeritics. The BJH model and pore size test are specifically described below. The shape of the pore is assumed to be cylindrical, and the pore size that produces capillary condensation and the relative pressure of N₂ satisfies the Kelvin relationship. The distribution of the pore size of the material is characterized by the measured N₂ adsorption amounts at different partial pressures and the corresponding pore levels. The average pore size is calculated by multiplying the pore size at each level by the proportion coefficient. The pore size distribution obtained from the adsorption isotherm is mostly derived from the internal diameter of the pore, and the pore size distribution obtained from the desorption isotherm is mostly derived from the entry diameter of the pore. In the present disclosure, an entry diameter of the pore can be obtained using the desorption isotherm. In the present disclosure, the open pore size of the cathode active material satisfies the given range, which is conducive to allowing the open pores on the surface of the material to be relatively uniformly distributed on the surface of the secondary particles, and which is further conducive to the uniformity of the diffusion of the lithium ions and the reaction rate. Further, the average open pore size Dₒ of the cathode active material may range from 15 nm to 45 nm.

In some specific embodiments of the present disclosure, an open pore volume Vₒ of the cathode active material ranges from 0.002 cm³/g to 0.01 cm³/g, for example, 0.003 cm³/g, 0.004 cm³/g, 0.005 cm³/g, 0.006 cm³/g, 0.007 cm³/g, 0.008 cm³/g, 0.009 cm³/g, or 0.01 cm³/g, etc. The open pore volume of the cathode active material can be tested and analyzed using a surface analyzer according to N₂ adsorption-desorption isotherms. For example, it can be measured with a Tristar 3020 surface analyzer from Micromeritics. The N₂ adsorption-desorption isotherm test can specifically include the following steps. Using a conventional test device (Tristar 3020, etc.), N₂ is gradually added to the material sample to be tested from which the physical adsorption components have been removed in advance under a vacuum state. With a constant volume method, the pressure change caused by N₂ adsorption is calculated, and the N₂ adsorption amount is calculated according to the gas equation, thereby obtaining the N₂ adsorption isotherm from 0 atm (atm) to 0.995 atm at liquid nitrogen temperature. After reaching 0.995 atm, the N₂ pressure is gradually reduced to 0 atm, thereby obtaining the N₂ desorption isotherm from 0.995 atm to 0 atm. Thus, the N₂ adsorption-desorption isotherm is obtained by summarizing. The N₂ adsorption-desorption isotherm analysis is as follows. The open pore volume is calculated based on the N₂ adsorption amount when the relative pressure (p/p₀) of the N₂ adsorption isotherm is 0.995. The open pores of the cathode active material are mostly distributed on the surface of the secondary particles. In the present disclosure, the open pore volume of the cathode active material satisfies the given range. On the one hand, more reaction channels for the lithium ions can be provided. On the other hand, it is also conductive to reducing the risk of excessive erosion of the electrolyte into the interior of the material, which causes that the electrolyte only forms a suitable CEI layer on the surface of the material and at the surface open pores. In this way, the cathode active material can have both high initial charge and discharge efficiency and good storage performance and cycle performance. Further, the open pore volume Vₒ of the cathode active material may range from 0.002 cm³/g to 0.008 cm³/g.

In some specific embodiments of the present disclosure, a skeleton volume Vt of the cathode active material ranges from 0.2 cm³/g to 0.25 cm³/g, for example, 0.2 cm³/g, 0.21 cm³/g, 0.22 cm³/g, 0.23 cm³/g, 0.24 cm³/g, or 0.25 cm³/g, etc. The skeleton volume of the cathode active material can be tested by a gas replacement method in combination with a true density meter. For example, the AccupyII 1345 true density meter from Micromeritics can be used to test the skeleton volume. The gas replacement method may specifically include the following step. By using inert gas N₂ as a replacement medium, the sample is sealed in a sample chamber filled with N₂. The expansion chamber is opened to allow the gas to diffuse to be stabilized, and then the volume of the sample is calculated based on the pressure change before and after the gas diffusion. It can be understood that since N₂ can quickly fill pores with diameters as small as angstroms, the measured volume is only the skeleton volume of the material. In the present disclosure, the skeleton volume of the cathode active material satisfies the given range, which is conductive to the balance between the particle size and intrinsic density of the material, allowing the cathode active material to have a higher charge and discharge specific capacity. Further, the skeleton volume Vt of the cathode active material may range from 0.2 cm³/g to 0.24 cm³/g.

In some specific embodiments of the present disclosure, a total porosity Pₜ of the cathode active material ranges from 1% to 10%, for example, 1%, 2%, 3%, 4%, 5%, 6%, 7%, 8%, 9%, or 10%, etc. The total porosity Pt of the cathode active material includes open pore porosity and closed pore porosity, and the closed pore porosity is usually greater than the open pore porosity. When the total porosity of the cathode active material satisfies the given range, space can be provided for the expansion and contraction of the cathode active material during the charge and discharge process, thereby improving the cycle stability of the cathode active material and enhancing the cycle performance of the material. Further, the total porosity Pt of the cathode active material may range from 1.5% to 8.5%.

In some specific embodiments of the present disclosure, in the secondary particles, an average pore size D_{C} of the closed pores ranges from 40 nm to 200 nm, for example, 40 nm, 50 nm, 60 nm, 80 nm, 100 nm, 120 nm, 150 nm, 180 nm, or 200 nm, etc. With reference to FIG. 2, by using the LIBMAS intelligent image analysis system, contrast analysis is performed on the cross-sectional electron microscope image of the secondary particles to obtain the cross-sectional area of each pore, and a shape of the pores in the cross-sectional electron microscope image is assumed to be circular to obtain the average cross-sectional pore size. The average pore size of the closed pores of either a single secondary particle or the secondary particles as a whole in the cathode active material satisfies the given range. In this case, the test of the cathode active material sample may refer to the above-mentioned method for testing the total porosity of the cathode active material, and multiple secondary particles can be sampled and selected from the test sample to obtain the average closed pore size corresponding to each of the multiple secondary particles and then calculate the average value. When the average closed pore size of the secondary particles satisfies the given range, the material may not only have vacancies in the form of small pores thar are relatively evenly distributed inside the particles, which is beneficial to improving the structural stability and particle strength of the cathode active material, the small gaps between the primary particles can also provide a larger space for expansion and contraction during the charge and discharge cycle, thereby improving the cycle performance of the cathode active material. At the same time, it can also avoid excessive loss of good conductivity and mass transfer performance between materials, which is beneficial for the cathode active material to have good rate capability. Further, in the secondary particles, the average closed pore size D_{C} may range from 60 nm to 180 nm.

In some specific embodiments of the present disclosure, a specific surface area of the cathode active material is S⁰, a specific surface area of the cathode active material fractured by a pressure of 3.5 tons is S^{3.5}, and a specific surface area change rate ΔSSA of the cathode active material ranges from 0% to 50%, where ΔSSA=(S^{3.5}-S⁰)/S⁰×100%. For example, ΔSSA may be 0%, 5%, 10%, 15%, 20%, 25%, 30%, 35%, 40%, 45%, or 50%, etc. The specific surface area of the cathode active material can be tested based on the N₂ static adsorption principle using a surface analyzer, such as the Tristar 3020 surface analyzer from Micromeritics. The specific operations are described below. In a test device, N₂ is gradually added to the material to be tested from which physical adsorption components have been removed in advance under a vacuum state, the pressure change caused by N₂ adsorption is calculated with a constant volume method, and the N₂ adsorption amount is obtained based on a gas equation. In this way, the N₂ adsorption amount from 0 atm to 0.3 atm at liquid nitrogen temperature is obtained and converted into specific surface area per gram weight. The cathode active material, whose specific surface area change rate before and after fracturing at a pressure of 3.5 tons satisfies the given range, has good compressive properties. In the subsequent production process of the electrode plate, on the one hand, the risk of material ball cracking during the compaction of the electrode plate can be avoided, improving the stability of the battery, and reducing safety risks. On the other hand, the cathode active material can tolerate a higher pallet density and have the potential to further improve the energy density of the positive electrode plate and the battery.

In some specific embodiments of the present disclosure, a particle size of the cathode active material corresponding to a cumulative volume distribution of the cathode active material reaching 10% is D₁₀⁰, a particle size of the cathode active material fractured by a pressure of 3.5 tons corresponding to the cumulative volume distribution of the cathode active material reaching 10% is D₁₀^{3.5}, and a particle size change rate ΔD₁₀ of the cathode active material ranges from 0% to 20%, where ΔD₁₀=(D₁₀⁰-D₁₀^{3.5})/D₁₀⁰×100%. For example, ΔD₁₀ may be 0%, 2%, 5%, 8%, 10%, 12%, 15%, 18%, or 20%, etc. The particle size of the cathode active material can be tested by a laser particle size analyzer, such as the Hydro 2000mu laser particle size analyzer produced by Marvern. The cathode active material, whose particle size change rate before and after fracturing at a pressure of 3.5 tons satisfies the given range, has better compressive properties and produces less fracturing fine powder under strong pressure. Therefore, it is conductive to further improving the stability of the cathode active material during the manufacturing process of the electrode plate and reducing safety risks.

In some specific embodiments of the present disclosure, the cathode active material may include Li₁₊ₐNiₓCo_{y}Mn_{z}MₘO₂, where -0.05≤a≤0.3, 0.8≤x≤1, 0≤y≤0.2, 0≤z≤0.2, and 0≤m≤0.01; and M may include at least one of Mg, La, Al, Sr, Ba, Y, Zr, Ca, Fe, Zn, Sn, W, V, Mo, Sb, Ta, Ti, Nb, S, P, and B. For example, the value of a may be -0.05, -0.02, 0, 0.05, 0.1, 0.1, 0.2, 0.25, or 0.3, etc.; the value of x may be 0.8, 0.85, 0.9, 0.95, or 1, etc.; the value of y may be 0, 0.05, 0.1, 0.15, or 0.2, etc.; the value of z may be 0, 0.05, 0.1, 0.15, or 0.2, etc.; the value of m may be 0, 0.001, 0.002, 0.003, 0.004, 0.005, 0.006, 0.007, 0.008, 0.009, or 0.01, etc. Optionally, m>0, and further optionally, 0.002≤m≤0.01. The cathode active material satisfies the given ranges has a higher energy density and operating voltage, and relatively good cyclability, which can further improve the cycle life of the battery.

In some specific embodiments of the present disclosure, when m>0, in the cathode active material, M may include at least one of Sn, W, V, La, Mo, Sb, Ta, Ti, and Nb, and a full width at half maximum of a diffraction peak corresponding to a 104 crystal plane in an XRD spectrum of the primary particles can range from 0.245 to 0.270, for example, 0.245, 0.250, 0.255, 0.260, 0.265 or 0.270, etc. The full width at half maximum of the diffraction peak corresponding to the 104 crystal plane in the XRD spectrum of the primary particles can be characterized by an X-ray diffractometer, for example, Smart Lab9 KW test of Rigaku, Japan. By adopting the given type of high-valent element as a doping element, the particle size of the primary particles of the cathode active material can be refined or the arrangement effect of the primary particles can be affected, thereby affecting the aggregation state of the primary particles when forming the secondary particles as well as the overall pore structure of the cathode active material. When the half-width of the 104 crystal plane of the primary particles of the cathode active material having the given type of high-valent doping element satisfies the given range, even if the half-width of the 104 crystal plane of the primary particles is of a smaller value, primary particles with a relatively large average size can be obtained, and thus a better pore structure can be obtained when the primary particles are aggregated into the secondary particles.

In some specific embodiments of the present disclosure, when m>0, M may include at least one of S, P, and B, and the full width at half maximum of the diffraction peak corresponding to the 104 crystal plane in the XRD spectrum of the primary particles can range from 0.250 to 0.275, for example, 0.250, 0.255, 0.260, 0.265, 0.270, or 0.275, etc. The given type of elements when used as the doping elements can also have a pore-forming effect. The doping elements are mostly doped and enriched between the primary particles. After washing, gaps can be left between the primary particles. In this case, if the full width at half maximum of the 104 crystal plane of the primary particles satisfies the given range, a better pore structure can be advantageously obtained when the primary particles are aggregated to form the secondary particles.

In some specific embodiments of the present disclosure, when m>0, M may include at least one of Mg, Al, Sr, Ba, Y, Zr, Ca, Fe, and Zn, and the full width at half maximum of the diffraction peak corresponding to the 104 crystal plane in the XRD spectrum of the primary particles can range from 0.255 to 0.280, for example, 0.255, 0.260, 0.265, 0.270, 0.275, or 0.280, etc. When the given type of element is adopted as the doping element, the half-width of the diffraction peak corresponding to the 104 crystal plane is controlled to be within the given range, enabling the half-width of the 104 crystal plane of the primary particles to have a greater value. Thus, the primary particles with a relatively small average size can be obtained, thereby reducing the risk of losing the pore effect due to excessive fusion and excessive growth between the primary particles. Therefore, it is also conductive to obtaining a better pore structure.

In some specific embodiments of the present disclosure, in the cathode active material, the secondary particles includes a matrix and a coating layer provided on a least part of a surface of the matrix. The matrix may include the Li₁₊ₐNiₓCo_{y}Mn_{z}MₘO₂. By providing the coating layer, the pore structure of the cathode active material can be regulated to a certain extent, thereby lowering the open pore porosity and reducing the side reactions between the cathode active material particles and the electrolyte. In addition, the coating layer is also conductive to improving the cycle stability of the cathode active material to a certain extent.

In some specific embodiments of the present disclosure, the coating layer may include element J, and the element J may include at least one of Al, Zr, Ti, F, B, Cl, Br, I, S, W, Co, Sn, and Mo. By doping the given type of elements in the coating layer, the cathode active material can be protected, the side reactions between the surface of the cathode active material and the electrolyte can be reduced by forming a high-quality CEI film, and gas production can be inhibited. In this way, the storage life and electrochemical cycle performance of the cathode active material can be improved.

In some specific embodiments of the present disclosure, the coating layer may include the J element, and a ratio of the total number of moles of Ni, Co, Mn, and M in the matrix to the number of moles of the element J in the coating layer is 1: (0 to 0.05), for example, 1/0.01, 1/0.02, 1/0.03, 1/0.04, or 1/0.05, etc. When the given range is satisfied, the cycle performance of the cathode active material can be advantageously improved, and the pore structure of the cathode active material can be taken into consideration, thereby reducing the risk of affecting the specific capacity, electrochemical activity, and rate capability of the cathode active material due to the high content of the coating layer. Therefore, the cathode active material can have the advantages of high electrochemical activity, high energy density, high particle strength, and long cycle life.

In some specific embodiments of the present disclosure, the method for obtaining a cathode active material having a desired pore structure is not particularly limited, and those skilled in the art can flexibly select according to actual needs. For example, the aggregation effect that the primary particles are aggregated into the secondary particles can be regulated by regulating one or more of the porosity of the precursor, particle size, morphology, and arrangement of the primary particles. In this way, the pore structure of the cathode active material can be regulated, thereby obtaining a cathode active material having a desired pore structure. On this basis, the pore structure of the cathode active material can be further regulated by providing a coating layer or not and by regulating one or more of the material and thickness of the coating layer. In addition, the porosity of the primary particle precursor can be regulated by methods such as co-precipitation of the precursor.

In a second aspect, the present disclosure provides a method for preparing the above-mentioned cathode active material. The method includes: (1) performing, under an alkaline condition, a co-precipitation reaction of an aqueous solution of a nickel source, a cobalt source, and a manganese source, to obtain precursor particles; and (2) mixing the precursor particles with a lithium source and an M source, and performing a sintering treatment on the mixture, to obtain the cathode active material. In this method, the temperature and duration of the sintering treatment can be regulating by combining the composition of nickel, cobalt, and manganese, the control of a porosity of the precursor, and the doping amount of the element M with grain size and arrangement of the primary particles. In this way, an aggregation effect of the primary particles in the secondary particles can be regulated, thereby obtaining a cathode active material in which a ratio of an open pore porosity to a total porosity ranges from 25% to 85%. Thus, the material can have higher particle strength, high rate capability, and better cycle stability against expansion and contraction during charge and discharge. It should be noted that the characteristics and effects described for the above-mentioned cathode active material are also applicable to the method for preparing the cathode active material, which will not be repeated herein.

In some specific embodiments of the present disclosure, in step (1), the co-precipitation reaction can be performed under the alkaline condition with a pH value ranging from 10 to 11.5. For example, during the co-precipitation reaction, the nickel source, the cobalt source, and the manganese source can be dissolved in water and the pH value of the mixed solution can be controlled to range from 10 to 11.5. In this way, the crystals nucleate and grow until the median particle size D₅₀ of the particles ranges from 9 µm to 20 µm. By controlling the pH value of the mixed solution, a rate of the co-precipitation reaction can be advantageously regulated and pores can be formed in the precursor. Thus, the cathode active material can still retain a certain porosity effect during the subsequent sintering and fusion process. Optionally, an aqueous ammonia solution may be added as a complexing agent during the co-precipitation reaction.

In some specific embodiments of the present disclosure, in step (2), the sintering treatment may include: holding a temperature ranging from 650°C to 900°C for 4 hours to 15 hours. For example, the sintering temperature may be 650°C, 700°C, 750°C, 800°C, 850°C, or 900°C, and the holding duration may be 4 hours, 6 hours, 8 hours, 10 hours, 12 hours, or 15 hours, etc. In the actual operation process, the sintering temperature and the duration can be flexibly controlled according to the actual conditions such as the type of the doping element M and the composition of nickel, cobalt, and manganese, to obtain the expected primary particle size or full width at half maximum of the 104 crystal plane, which is conducive to obtaining a suitable porosity effect of the cathode active material.

In some specific embodiments of the present disclosure, in step (2), after the sintering process is completed, operations such as cooling, crushing, and sieving may also be performed.

In some specific embodiments of the present disclosure, the step (2) may further include: mixing a sintered product (i.e., a sintered material) with a coating material containing a J source, and keeping the mixture at a temperature ranging from 300°C to 700°C for 5 hours to 10 hours. Therefore, a coating layer containing the element J can be formed on the surface of the sintered material, to obtain a cathode active material having a matrix and a coating layer structure. The beneficial effects of forming the coating layer and the characteristics and effects such as the type of the element J have been described in detail in the previous part, which will not be repeated herein.

In a third aspect, the present disclosure provides a positive electrode plate, which includes the above-mentioned cathode active material or the cathode active material prepared by the above-mentioned method. It should be noted that the features and effects described for the above-mentioned cathode active material and the above-mentioned method for preparing the cathode active material are also applicable to the positive electrode plate, which will not be repeated herein. In general, the positive electrode plate has good cycle stability and long cycle life.

Typically, the positive electrode plate may include a positive current collector and a cathode active substance layer disposed on at least one side of the positive current collector. The cathode active substance layer may include the above-mentioned cathode active material or the cathode active material obtained by the above-mentioned preparation method. The positive current collector may include, but not limited to, a metal foil (such as an aluminum foil) or a composite current collector. The cathode active substance layer may further include a binder and a conductive agent. The specific types and sources of the binder and the conductive agent are not particularly limited and can be flexibly selected by those skilled in the art according to actual needs. For example, the binder may include, but not limited to, polyvinylidene fluoride, and the conductive agent may include, but not limited to, one or more of conductive carbon black, carbon nanotubes, graphene, etc.

In a fourth aspect, the present disclosure provides a battery including the above-mentioned positive electrode plate. It should be noted that the characteristics and effects described for the above-mentioned positive electrode plate are also applicable to the battery, which will not be repeated herein. Optionally, the battery may be a secondary battery.

Typically, in addition to the positive electrode plate, the battery further includes a negative electrode plate, electrolyte, a separator, etc. The specific structures or compositions of the negative electrode plate, the electrolyte, and the separator are not particularly limited and can be flexibly selected by those skilled in the art according to actual needs. For example, the negative electrode plate may include a negative current collector and a negative active substance layer disposed on at least one side of the negative current collector. The negative active substance layer may include a negative active material, a binder, a conductive agent, etc. The negative current collector may include, but not limited to, a metal foil (such as a copper foil, etc.) or a composite current collector. The specific types and sources of the active material, the binder, and the conductive agent in the negative electrode plate are not particularly limited, and those skilled in the art can flexibly select according to actual needs. For example, the negative active material may include, but not limited to, one or more of hard carbon, soft carbon, silicon-based materials, silicon-carbon materials, etc.; the binder may include, but not limited to, styrene-butadiene rubber, etc.; and the conductive agent may include, but not limited to, one or more of conductive carbon black, carbon nanotubes, graphene, etc. In addition, the negative active substance layer may be selectively added with conventional components such as a thickener. For another example, the separator may include, but not limited to, a polyethylene (PE) film, a polypropylene (PP) film, a PP/PE/PP composite film, a composite ceramic separator, a rubber-coated separator, etc. For another example, the electrolyte may include an organic solvent and an electrolyte salt. As an example, for a lithium battery, the organic solvent may include one or more ester solvents such as dimethyl carbonate (DMC), ethylene carbonate (EC), and ethyl methyl carbonate (EMC). The electrolyte salt may include, but not limited to, one or more common lithium salts such as lithium hexafluorophosphate (LiPF₆), lithium bis(fluorosulfonyl)imide (LiFSI), lithium tetrafluoroborate (LiBF₄), lithium hexafluoroarsenate (LiAsF₆), lithium bis(oxalatoborate) (LiBOB), and lithium difluorophosphate (LiO₂F₂). Optionally, the electrolyte may be added with an additive, and the additive may include, but not limited to, common additives such as vinylene carbonate (VC) and fluoroethylene carbonate (FEC).

In a fifth aspect, the present disclosure provides an electrical device including the above-mentioned battery. It should be noted that the features and effects described for the above-mentioned battery are also applicable to the electrical device, which will not be repeated herein. In addition, it should be noted that the specific type of the electrical device is not particularly limited and can be flexibly selected by those skilled in the art according to actual needs. For example, the electrical device may include, but not limited to, electronic apparatuses, household appliances, vehicles, etc.

The present disclosure is described below with reference to specific examples. It should be noted that these examples are merely illustrative and do not limit the present disclosure in any way. The specific techniques or conditions, when not specified in the examples, are those techniques or conditions described in the literature in the art or performed according to the product description. The used reagents or instruments without indicating the manufacturer are conventional and commercially available products.

In the following examples, unless otherwise specified, all raw materials are commercially available.

In the following examples and comparative examples, the relevant parameters were tested by the following methods.
(1) Morphology test: obtained by testing with S-4800 scanning electron microscope from HITACHI, Japan.
(2) Test of total porosity Pₜ: the cross section of the cathode active material was obtained by Hitachi IM4000 II ion milling instrument, the image of the cross section of the material was sampled by S-4800 scanning electron microscope, and then the total porosity Pt was obtained by performing the image contrast analysis using LIBMAS intelligent image analysis system. The test value of each sample was the average porosity tested by 6 granular balls. When taking samples using the scanning electron microscope, samples with a cross-sectional diameter between material particle sizes D₅₀ and D₈₀ were selected.
(3) Test of average closed pore size D_{C}: the contrast analysis was performed on the cross-sectional electron microscope image by the LIBMAS intelligent image analysis system, to obtain the cross-sectional area of each pore. The average cross-sectional pore size was obtained by assuming the shape of the pores in the cross-sectional electron microscope image to be circular. The test value of each sample was based on 6 granular balls and the average value was calculated.
(3) Test of material specific surface area: obtained by testing with a Tristar 3020 surface analyzer from Micromeritics according to N₂ static adsorption.

Specifically, the N₂ static adsorption was performed as follows. In the test device, N₂ was gradually added to the material to be tested from which the physical adsorption components have been removed in advance under a vacuum state. The pressure change caused by N₂ adsorption was calculated with a constant volume method. The N₂ adsorption amount was calculated according to the gas equation. Therefore, the N₂ adsorption amount from 0 atm to 0.3 atm at liquid nitrogen temperature was obtained and converted into specific surface area per gram weight.

(4) Test of open pore volume Vₒ: obtained by using a Tristar 3020 surface analyzer from Micromeritics according to N₂ adsorption-desorption isotherm test and analysis.

The N₂ adsorption-desorption isotherm test specifically included the following step. Using a conventional test device (Tristar 3020, etc.), N₂ was gradually added to the material sample to be tested from which the physical adsorption components had been removed in advance under a vacuum state. With a constant volume method, the pressure change caused by N₂ adsorption was calculated, and the N₂ adsorption amount was calculated according to the gas equation, thereby obtaining the N₂ adsorption isotherm from 0 atm (atm) to 0.995 atm at liquid nitrogen temperature. After reaching 0.995 atm, the N₂ pressure was gradually reduced to 0 atm, thereby obtaining the N₂ desorption isotherm from 0.995 atm to 0 atm. Thus, the N₂ adsorption-desorption isotherm is obtained by summarizing. The N₂ adsorption-desorption isotherm analysis was as follows: the open pore volume was calculated based on the N₂ adsorption amount when the relative pressure (p/p₀) of the N₂ adsorption isotherm was 0.995.

(5) Test of average open pore size Dₒ: obtained by testing with Tristar 3020 model surface analyzer from Micromeritics according to the Barrett-Joyner-Halenda (BJH) model.

The BJH model and pore size test were specifically described below. The shape of the pore was assumed to be cylindrical, and the pore size producing capillary condensation and the relative pressure of N₂ satisfied the Kelvin relationship. The distribution of the pore size of the material was characterized by the measured N₂ adsorption amounts at different partial pressures and the corresponding pore levels. The average pore size was calculated by multiplying the pore size at each level by the proportion coefficient. In the present disclosure, an entry diameter of the pore can be obtained using the desorption isotherm.

(6) Test of skeleton volume Vₜ of cathode active material: obtained by testing with AccupyII 1345 true density meter from Micromeritics based on the gas replacement method.

The gas replacement method specifically included the following step. By using inert gas N₂ as a replacement medium, the sample was sealed in a sample chamber filled with N₂. The expansion chamber was opened to allow the gas to diffuse to be stabilized, and then the volume of the sample was calculated based on the pressure change before and after the gas diffusion.

(7) Material XRD and refinement: obtained based on Smart Lab9 KW test from Rigaku, Japan.

(8) Test of material particle size distribution: obtained by testing with Hydro 2000mu laser particle size analyzer from Marvern.

(9) Test of particle strength: obtained by testing the particles using an MCT-210 micro compression tester from Shimadzu Instruments.

(10) Test of electrochemical performance:
In the following examples and comparative examples, the electrochemical performance of the multi-element cathode material was tested using a 2025 button battery.

The preparation process of the 2025 button battery was as follows.

Preparation of electrode plate: the multi-element cathode active material, acetylene black, and polyvinylidene fluoride (PVDF) according to a mass ratio of 95: 3: 2 were fully mixed with an appropriate amount of N-methylpyrrolidone (NMP), to form an even slurry. The slurry was coated on an aluminum foil and dried at 120°C for 12 hours, and then stamped into a positive electrode plate with a diameter of 12 mm and a thickness of 120 µm under a pressure of 100 MPa. A loading amount of the multi-element cathode material was (15.5±0.5) mg/cm².

Assembly of battery: in an argon gas-filled gas glove box with a water content and an oxygen content of less than 5 ppm, the positive electrode plate, a separator, a negative electrode plate, and electrolyte were assembled into a 2025-type button battery and left to stand for 6 hours. A lithium metal plate with a diameter of 17 mm and a thickness of 1 mm was used as the negative electrode plate. A polyethylene porous membrane (Celgard 2325) with a thickness of 25 µm was used as the separator. A mixture of equal amounts of 1mol/L NaPF₆, ethylene carbonate (EC), and diethyl carbonate (DEC) was used as the electrolyte.

### Tests for the 2025 button battery:

In the following examples and comparative examples, the electrochemical performance of the 2025 button battery was tested using a Neware battery test system from Shenzhen Neware Technology Co., Ltd., and the charge and discharge current density at 0.1 C was 200 mA/g.

The charge and discharge voltage range was controlled to range from 3.0 V to 4.3V. At room temperature, the button battery was subjected to charge and discharge tests at 0.1 C to evaluate the electrochemical performance of the multi-element cathode material.

Test of cycle performance: the charge and discharge voltage range was controlled to range from 3.0 V to 4.3 V. At a constant temperature of 45°C, the button battery was charged and discharged at 0.1 C twice, and then charged and discharged for 80 cycles at 1 C, to evaluate the high-temperature capacity retention rate of the multi-element cathode material.

Test of rate capability: the charge and discharge voltage range was controlled to range from 3.0 V to 4.3 V. At room temperature, the button battery was charged and discharged at 0.1 C twice, and then charged and discharged once at 0.2 C, 0.33 C, 0.5 C, and 1 C. The rate capability of the multi-element cathode material was evaluated by the ratio of the first discharge specific capacity at 0.1 C to the discharge specific capacity at 1 C. A first discharge specific capacity at 0.1 C is the discharge specific capacity of the button battery in the first cycle, and a discharge specific capacity at 1 C is the discharge specific capacity of the button battery in the sixth cycle.

### Example 1

(1) Nickel sulfate, cobalt sulfate, and manganese sulfate according to a molar ratio of element nickel, element cobalt, and element manganese of 83.3: 10:6 were dissolved in pure water, to obtain a mixed salt solution with a concentration of 2 mol/L. A sodium hydroxide solution with a concentration of 8 mol/L was prepared as a precipitant solution, and an ammonia solution with a concentration of 6 mol/L was prepared as a complexing agent solution. The mixed salt solution, the sodium hydroxide solution, and the ammonia solution were added into a reactor from liquid inlet pipes protected by N₂. A stirring speed was maintained at 600 rpm, a liquid inflow of the mixed salt solution was controlled at 400 mL/h, and the flow rates of the sodium hydroxide solution and the ammonia solution were adjusted to keep the pH of the reaction system stable at 10.9±0.05. The temperature of the reaction system was controlled at 60°C. After the average particle size Dv50 of the particles in the reaction system grew to 14 µm, the particles were aged for 1 hour, separated, washed, and dried, to obtain a cathode active material precursor.
(2) The above-mentioned precursor, lithium hydroxide, aluminum oxide, and niobium pentoxide according to a molar ratio of a sum of nickel, cobalt, and manganese elements in the precursor, element lithium, element aluminum, and element niobium of 0.993: 1.03: 0.004: 0.003 were mixed evenly. The mixture was heated in an oxygen furnace and then sintered at a constant temperature. The oxygen concentration in the oxygen furnace was greater than 95% by volume, the temperature-rising rate was 5°C/min, the sintering temperature was 810°C, and the sintering duration was 10 hours. After naturally cooling to room temperature, the mixture was crushed, sieved, and iron removed, to obtain a cathode active material sintered material.
(3) The sintered cathode active material and boric acid according to a molar ratio of a sum of Ni, Co, Mn, Al, and Nb in the sintered cathode active material to element boron of 1: 0.001 were mixed evenly in a high-speed mixer, and the mixture was sintered at a constant temperature of 350°C in the oxygen furnace. The concentration of oxygen in the oxygen furnace was greater than 90% by volume, and the sintering duration was 8 hours. After cooling, sieving, and iron removal, a cathode active material of Li_{1.03}Ni_{0.833}Co_{0.100}Mn_{0.060}Al_{0.004}Nb_{0.003}O₂@B was obtained. In the chemical formula of the cathode active material, the elements in front of @ represent the components of the matrix, and the element behind @ represents the main element in the coating layer.

### Example 2 to Example 10 and Comparative Example 1 to Comparative Example4

The differences between Examples 2 to 14 and Comparative Examples 1 to 6 and Example 1 were detailed in Table 1 and Table 2.

In Example 2, zirconium dioxide and tungsten oxide were adopted as the dopant M source, and boric acid was adopted as the coating agent.

In Example 3, magnesium oxide and tin dioxide were adopted as the dopant M source, and tungsten trioxide was adopted as the coating agent.

In Example 4, strontium oxide and antimony trioxide were adopted as the dopant M source, and tungsten trioxide was adopted as the coating agent.

In Example 5, aluminum oxide and lithium sulfate were adopted as the dopant M source, and boric acid was adopted as the coating agent.

In Example 6, aluminum oxide and strontium hydroxide were adopted as the dopant M source, and boric acid was adopted as the coating agent.

In Example 7, aluminum oxide and niobium pentoxide were adopted as the dopant M source.

In Example 8, aluminum oxide and boric acid were adopted as the dopant M source, and cobalt hydroxide was adopted as the coating agent.

In Example 9, titanium dioxide and niobium pentoxide were adopted as the dopant M source, and tungsten trioxide was adopted as the coating agent.

In Example 10, aluminum oxide and lithium sulfate were adopted as the dopant M source, and boric acid was adopted as the coating agent.

In Comparative Example 1, aluminum oxide and niobium pentoxide were adopted as the dopant M source, and boric acid was adopted as the coating agent.

In Comparative Example 2, aluminum oxide and niobium pentoxide were adopted as the dopant M source, and boric acid was adopted as the coating agent.

In Comparative Example 3, aluminum oxide and niobium pentoxide were adopted as the dopant M source, and boric acid was adopted as the coating agent.

In Comparative Example 4, aluminum oxide and niobium pentoxide were adopted as the dopant M source, and the coating agent adopted boric acid.

The relevant test results of Examples 1 to 10 and Comparative Examples 1 to 4 are shown in Table 2.

**[Table 1] Differences between Examples 1 to 10 and Comparative Examples 1 to 4 and related test results**

| Example | Molar ratio of metal elements in cathode active material | | | | | | Doping element M | | Coating element J | | pH value of co-precipitation reaction system | Sintering of precursor | |
|---|---|---|---|---|---|---|---|---|---|---|---|---|---|
| | Li | Ni | Co | Mn | M1 | M2 | Type of M1 | Type of M2 | Type of J | Relative number of moles of J | | Temperature | Duration |
| Example 1 | 1.03 | 0.833 | 0.1 | 0.06 | 0.004 | 0.003 | A 1 | Nb | B | 0.001 | 10.9 | 810°C | 10 h |
| Example 2 | 1.03 | 0.833 | 0.1 | 0.06 | 0.004 | 0.003 | Zr | W | B | 0.001 | 10.9 | 800°C | 10 h |
| Example 3 | 1.03 | 0.833 | 0.1 | 0.06 | 0.004 | 0.003 | Mg | Sn | W | 0.001 | 10.9 | 800°C | 10 h |
| Example 4 | 1.03 | 0.833 | 0.1 | 0.06 | 0.004 | 0.003 | Sr | Sb | W | 0.001 | 10.9 | 810°C | 10 h |
| Example 5 | 1.03 | 0.833 | 0.1 | 0.06 | 0.004 | 0.003 | A1 | S | B | 0.001 | 10.9 | 810°C | 10 h |
| Example 6 | 1.03 | 0.833 | 0.1 | 0.06 | 0.004 | 0.003 | A1 | Sr | B | 0.001 | 10.9 | 810°C | 10 h |
| Example 7 | 1.03 | 0.833 | 0.1 | 0.06 | 0.004 | 0.003 | A1 | Nb | / | / | 10.9 | 810°C | 10 h |
| Example 8 | 1.04 | 0.886 | 0.08 | 0.03 | 0.002 | 0.002 | A1 | B | Co | 0.01 | 10.9 | 790°C | 10 h |
| Example 9 | 1.02 | 0.817 | 0.09 | 0.09 | 0.001 | 0.002 | Ti | Nb | W | 0.01 | 10.9 | 810°C | 10 h |
| Example 10 | 1.03 | 0.833 | 0.1 | 0.06 | 0.004 | 0.003 | A1 | S | B | 0.001 | 10.5 | 810°C | 10 h |
| Comparative Example 1 | 1.03 | 0.833 | 0.1 | 0.06 | 0.004 | 0.003 | A1 | Nb | B | 0.001 | 10.9 | 910°C | 10 h |
| Comparative Example 2 | 1.03 | 0.833 | 0.1 | 0.06 | 0.004 | 0.003 | A1 | Nb | B | 0.001 | 10.9 | 810°C | 18h |
| Comparative Example 3 | 1.03 | 0.833 | 0.1 | 0.06 | 0.004 | 0.003 | A1 | Nb | B | 0.05 | 10.9 | 810°C | 10 h |
| Comparative Example 4 | 1.03 | 0.833 | 0.1 | 0.06 | 0.004 | 0.003 | A1 | Nb | B | 0.001 | 11.8 | 810°C | 10 h |

**[Table 2] Differences between Examples 1 to 10 and Comparative Examples 1 to 4 and related test results**

| Example | Open pore porosity Pₒ/% | Total porosity Pₜ/% | Pₒ/Pₜ /% | Average open pore size Dₒ/nm | Open pore volume Vₒ/cm³/g | Skeleton volume Vₜ/cm³/g | Average closed pore size D_{C}/nm | Full width at half maximum of 104 crystal plane | Surface area change rate of fracturing at 3.5t ΔSSA/% | Particle size change rate of fracturing at 3.5t ΔD10/% | 0.1 C charge capacity/mAh/g | 0.1C discharge capacity/mAh/g | First cycle efficiency /% | 1C/0.1C rate discharge specific capacity ratio | 45°C 1C/1C retention rate for 80 cycles/% |
|---|---|---|---|---|---|---|---|---|---|---|---|---|---|---|---|
| Example 1 | 1.53% | 4.53% | 33.79% | 26 | 0.00326 | 0.213 | 89 | 0.251 | 28 | 12.2 | 236.4 | 216.3 | 91.5 | 0.91 | 90.4 |
| Example 2 | 1.87% | 3.99% | 46.78% | 18 | 0.00433 | 0.232 | 85 | 0.250 | 22 | 10.5 | 236.3 | 214.8 | 90.9 | 0.90 | 90.6 |
| Example 3 | 1.73% | 4.52% | 38.33% | 29 | 0.00376 | 0.217 | 112 | 0.252 | 29 | 13.2 | 236.1 | 215.2 | 91.1 | 0.90 | 90.3 |
| Example 4 | 1.45% | 4.79% | 30.31 % | 25 | 0.00318 | 0.219 | 96 | 0.251 | 31 | 13.6 | 236.6 | 215.3 | 91.0 | 0.90 | 90.0 |
| Example 5 | 2.28% | 6.76% | 33.74% | 31 | 0.00536 | 0.235 | 126 | 0.253 | 40 | 16.5 | 236.5 | 211.3 | 89.3 | 0.91 | 91.5 |
| Example 6 | 1.77% | 5.01% | 35.42% | 32 | 0.00401 | 0.226 | 140 | 0.258 | 30 | 13.8 | 232.2 | 210.3 | 90.6 | 0.89 | 91.3 |
| Example 7 | 2.13% | 4.86% | 43.92% | 26 | 0.00444 | 0.208 | 88 | 0.251 | 29 | 13.7 | 234.3 | 210.6 | 89.9 | 0.90 | 90.6 |
| Example 8 | 1.70% | 4.97% | 34.11% | 26 | 0.00378 | 0.223 | 98 | 0.252 | 32 | 13.9 | 238.9 | 218.9 | 91.6 | 0.92 | 88.3 |
| Example 9 | 2.40% | 7.48% | 32.13% | 26 | 0.00572 | 0.238 | 128 | 0.254 | 42 | 17.8 | 232.6 | 211.8 | 91.1 | 0.91 | 93.6 |
| Example 10 | 3.20% | 5.75% | 55.70% | 38 | 0.00743 | 0.232 | 89 | 0.250 | 40 | 17.7 | 236.5 | 217.6 | 92.0 | 0.92 | 90.1 |
| Comparative Example 1 | 0.82% | 3.63% | 22.51% | 26 | 0.00201 | 0.246 | 53 | 0.241 | 52 | 20.3 | 234.5 | 212.3 | 90.5 | 0.85 | 88.3 |
| Comparative Example 2 | 1.46% | 1.64% | 89.03% | 25 | 0.00311 | 0.213 | 30 | 0.244 | 18 | 10.7 | 236.2 | 214.3 | 90.7 | 0.86 | 82.6 |
| Comparative Example 3 | 0.73% | 4.03% | 18.24% | 11 | 0.00183 | 0.249 | 95 | 0.251 | 53 | 20.5 | 234.3 | 210.6 | 89.9 | 0.89 | 89.4 |
| Comparative Example 4 | 1.26% | 1.37% | 92.10% | 20 | 0.00294 | 0.233 | 21 | 0.254 | 18 | 10.6 | 234.6 | 212.9 | 90.8 | 0.84 | 82.3 |

### Results and conclusions:

FIG. 1 shows the pore structure of the precursor prepared in Example 1, and FIG. 2 shows the distribution of the closed pores of the cross-section of the cathode active material prepared in Example 1. In combination with Examples 1 to 10 and Comparative Examples 1 to 4, as well as in combination with Table 1 to Table 2 and FIG. 1 to FIG. 2, it can be seen that a cathode active material with an open pore porosity accounting for 25% to 85% of the total porosity was obtained by adopting the preparation method according to the above-mentioned embodiments of the present disclosure. Moreover, when the cathode active material was used in a battery, the cathode active material with an open pore porosity accounting for 25% to 85% of the total porosity had a relatively better improvement effect on the rate capability and cycle performance of the battery, and the energy density, first efficiency, rate capability, and cycle performance of the battery were all good, having better overall performance of the battery. The tests reveal that the elemental compositions of the cathode active materials prepared in Examples 1 to 10 all satisfy the general formula Li₁₊ₐNiₓCo_{y}Mn_{z}MₘO₂, where -0.5≤a≤0.3, 0.8≤x≤1, 0≤y≤0.2, 0≤z≤0.2, and 0≤m≤0.01. In addition, based on Example 1 and Example 7, it can be seen that the electrochemical performance of the battery can be further improved by forming a coating layer on the cathode active material. Compared with Example 1, the open pore porosity of the cathode active materials prepared in Comparative Examples 1 and 3 took a relatively lower proportion in the total porosity, while the open pore porosity of the cathode active materials prepared in Comparative Examples 2 and 4 took a relatively higher proportion in the total porosity. The reason may attribute to the following facts. The sintering temperature in Comparative Example 1 was relatively high, and thus the volume of open pores and closed pores may be reduced due to the fusion of particles during the sintering, thereby affecting the proportion of the open pore porosity in the total porosity. The sintering duration in Comparative Example 2 was relatively long, such that the volume of closed pores and the volumes of all pores may be significantly reduced due to the fusion of particles during the sintering. In Comparative Example 3, a relatively great amount of the coating agent was used, thereby reducing the open pore porosity of the material. In Comparative Example 4, the pH value was controlled to be relatively great during the co-precipitation reaction, resulting in lower closed pore porosity and total porosity of the precursor.
In the specification, the reference terms such as "one embodiment", "some embodiments", "example", "specific example", or "some examples" means that the specific features, structures, materials, or characteristics described with reference to the embodiment or example are included in at least an embodiment or example of the present disclosure. In this specification, exemplary descriptions of the foregoing terms do not necessarily refer to the same embodiment or example. Moreover, the specific features, structures, materials, or characteristics described may be combined in any one or more embodiments or examples in a suitable manner. Furthermore, those skilled in the art may combine different embodiments or examples and features of different embodiments or examples described in this specification, unless they are contradictory to each other.

Although embodiments of the present disclosure are illustrated and described above, it can be understood that the above embodiments are illustrative and should not be construed as limitations of the present disclosure. Those skilled in the art can make changes, modifications, substitutions, and variations to the above embodiments within the scope of the present disclosure.

## Claims

1. A cathode active material, comprising secondary particles, the secondary particles being formed with aggregated primary particles, wherein:
the secondary particles have open pores and closed pores; and
an open pore porosity Pₒ of the cathode active material accounts for 25% to 85% of a total porosity Pt of the cathode active material.

2. The cathode active material according to claim 1, satisfying at least one of the following conditions:
the open pore porosity Pₒ of the cathode active material ranging from 0.5% to 3%;
an average open pore size Dₒ of the cathode active material ranging from 10 nm to 50 nm;
an open pore volume Vₒ of the cathode active material ranging from 0.002 cm³/g to 0.01 cm³/g; and
a skeleton volume Vₜ of the cathode active material ranging from 0.2 cm³/g to 0.25 cm³/g.

3. The cathode active material according to claim 1 or 2, wherein:
the total porosity Pt of the cathode active material ranges from 1% to 10%; and/or
in the secondary particles, the closed pores have an average pore size D_{C} ranging from 40 nm to 200 nm.

4. The cathode active material according to any one of claims 1 to 3, wherein a specific surface area of the cathode active material is S⁰; a specific surface area of the cathode active material fractured by a pressure of 3.5 tons is S^{3.5}; and a specific surface area change rate ΔSSA of the cathode active material ranges from 0% to 50%, where ΔSSA=(S^{3.5}-s⁰)/s⁰×100%; and/or
wherein a particle size of the cathode active material corresponding to a cumulative volume distribution of the cathode active material reaching 10% is D₁₀⁰; a particle size of the cathode active material fractured by a pressure of 3.5 tons corresponding to the cumulative volume distribution of the cathode active material reaching 10% is D₁₀^{3.5}; and a particle size change rate ΔD₁₀ of the cathode active material ranges from 0% to 20%, where ΔD₁₀=(D₁₀⁰-D₁₀^{3.5})/D₁₀⁰×100%.

5. The cathode active material according to any one of claims 1 to 4, comprising Li₁₊ₐNiₓCo_{y}Mn_{z}MₘO₂, wherein:
-0.05≤a≤0.3, 0.8≤x≤1, 0≤y≤0.2, 0≤z≤0.2, and 0≤m≤0.01, and
M comprises at least one of Mg, La, Al, Sr, Ba, Y, Zr, Ca, Fe, Zn, Sn, W, V, Mo, Sb, Ta, Ti, Nb, S, P, and B.

6. The cathode active material according to claim 5, wherein:
M comprises at least one of Sn, W, V, La, Mo, Sb, Ta, Ti, and Nb, and a full width at half maximum of a diffraction peak corresponding to a 104 crystal plane in an X-Ray Diffraction, XRD, spectrum of the primary particles ranges from 0.245 to 0.270; or
M comprises at least one of S, P, and B, and the full width at half maximum of the diffraction peak corresponding to the 104 crystal plane in the XRD spectrum of the primary particles ranges from 0.250 to 0.275; or
M comprises at least one of Mg, Al, Sr, Ba, Y, Zr, Ca, Fe, and Zn, and the full width at half maximum of the diffraction peak corresponding to the 104 crystal plane in the XRD spectrum of the primary particles ranges from 0.255 to 0.280.

7. The cathode active material according to claim 5 or 6, wherein the secondary particles comprise:
a matrix comprising the Li₁₊ₐNiₓCo_{y}Mn_{z}MₘO₂; and
a coating layer provided on a least part of a surface of the matrix.

8. The cathode active material according to claim 7, wherein:
the coating layer comprises element J, the element J comprising at least one of Al, Zr, Ti, F, B, Cl, Br, I, S, W, Co, Sn, and Mo; and/or
a ratio of the total number of moles of Ni, Co, Mn, and M in the matrix to the number of moles of the element J in the coating layer is 1: (0 to 0.05).

9. A method for preparing the cathode active material according to any one of claims 1 to 8, the method comprising:
Step 1 of performing, under an alkaline condition, a co-precipitation reaction of an aqueous solution of a nickel source, a cobalt source, and a manganese source, to obtain precursor particles; and
Step 2 of mixing the precursor particles with a lithium source and an M source, and performing a sintering treatment on the mixture, to obtain the cathode active material.

10. The method according to claim 9, satisfying at least one of the following conditions:
in Step 1, the co-precipitation reaction being performed under the alkaline condition with a pH value ranging from 10 to 11.5;
in Step 2, the sintering treatment comprising: holding a temperature ranging from 650°C to 900°C for 4 hours to 15 hours; and
the Step 2 further comprising: mixing a sintered product with a coating material containing a J source, and keeping the mixture at a temperature ranging from 300°C to 700°C for 5 hours to 10 hours.

11. A positive electrode plate, comprising:
the cathode active material according to any one of claims 1 to 8; or
the cathode active material prepared by the method according to any one of claims 9 to 10.

12. A battery, comprising the positive electrode plate according to claim 11.

13. An electrical device, comprising the battery according to claim 12.
